# EUROPÄISCHE PATENTSCHRIFT

(11) **EP 2 488 832 B1**
(45) Veröffentlichungstag und Bekanntmachung des Hinweises auf die Patenterteilung: **19.04.2017**
(21) Anmeldenummer: 10750110.8
(22) Anmeldetag: 01.09.2010
(51) Int. Cl.: G01D 11/24, G01D 11/30

(54) **SENSORANORDNUNG**
SENSOR ARRANGEMENT
AGENCEMENT DE CAPTEUR

(30) Priorität: 12.10.2009 DE 102009045557
(43) Veröffentlichungstag der Anmeldung: 22.08.2012
(73) Patentinhaber: Robert Bosch GmbH, 70442 Stuttgart (DE)
(72) Erfinder: MIEKLEY, Klaus, 71634 Ludwigsburg (DE); WILLIG, Rainer, 71732 Tamm (DE); ROGGE, Berthold, 70469 Stuttgart (DE); OECHSNER, Herbert, Schoental 74214 (DE); KONSTANTIN, Georg, Heilbronn 74081 (DE)
(86) Internationale Anmeldenummer: PCT/EP2010/062782
(87) Internationale Veröffentlichungsnummer: WO 2011/045117

(56) Entgegenhaltungen:
- DE-A1- 3 624 160
- DE-C1- 10 103 047
- GB-A- 2 254 668

## Beschreibung

### Stand der Technik

Die Erfindung geht aus von einer Sensoranordnung nach der Gattung des unabhängigen Patentanspruchs 1.

In modernen Kraftfahrzeugen werden aktive und passive Sicherheitssysteme, wie beispielsweise Rückhaltesysteme, wie z.B. Airbags, Gurtstraffer usw., sowie Systeme zur Regelung der Fahrdynamik, wie z.B. ESP, ABS usw. eingesetzt. Ein wesentlicher Bestandteil solcher Systeme sind Inertialsensoren, welche für die Messung von Beschleunigungen und/oder von Gier- bzw. Drehraten des Kraftfahrzeugs verwendet werden und bevorzugt als mikromechanische bzw. mikroelektromechanische Sensoren ausgeführt sind. Im Betrieb werden solche Sensoren durch eine geeignete mechanische Anregung in oszillierende Bewegungen versetzt, und auftretende Kräfte und/oder Beschleunigungen werden gemessen und ausgewertet.

In der Offenlegungsschrift DE 10 2007 058 965 A1 wird beispielsweise ein Kraftfahrzeugsensorgehäuse für einen Kraftfahrzeugsensor mit einem Einlegeteil beschrieben. Das beschriebene Kraftfahrzeugsensorgehäuse ist zur Dämpfung eines im/am Kraftfahrzeugsensorgehäuse angeordneten Sensormoduls in einem Bereich des Einlegeteils aus Polypropylen hergestellt. Der Kraftfahrzeugsensor ist bevorzugt als mikromechanischer bzw. mikroelektromechanischer Sensor, wie beispielsweise ein Inertialsensor ausgeführt, der bevorzugt als Drehraten- oder Airbagauslösesensor aufgebaut ist. Das Sensormodul kann einstückig mit dem Sensorgehäuse ausgebildet sein oder die beiden Komponenten können über eine mechanische Verbindung miteinander fest gekoppelt sein. Die Einlegeteile können beispielsweise als wenigstens eine metallische Stützbuchse ausgebildet werden, welche zum Abstützen von Befestigungskräften auf das Sensorgehäuse dient, welches mit einem Befestigungsmittel an der Karosserie befestigt ist.

In der Offenlegungsschrift GB 2 254 668 A wird eine Sensoranordnung mit einer Metallbuchse und Befestigungsmitteln beschrieben. Hierbei ist die Metallbuchse über die Befestigungsmittel mit einem Gehäuse verbindbar und die Sensoranordnung umfasst mindestens ein Sensormodul. Des Weiteren umfasst die Metallbuchse eine Hülse als Einpunktfixierung und einen Teller als Trägereinheit für eine Trägerplatte, auf welcher das mindestens eine Sensormodul angeordnet ist. Die Hülse ist zur Verbindung der Trägerplatte mit dem mindestens einen Sensormodul sowohl durch eine Durchgangsöffnung in der Trägerplatte als auch durch eine Durchgangsöffnung in dem mindestens einen Sensormodul geführt. Zudem sind die Enden der Metallbuchse so ausgeführt, dass die Verbindung zwischen dem mindestens einen Sensormodul und der Trägerplatte verbessert wird.

Ein häufig auftretendes Problem beim Einsatz von Inertialsensoren in Kraftfahrzeugen sind Störbeschleunigungen, die je nach Anbaustelle des Sensors auftreten können. Diese Störbeschleunigungen weisen einen besonders starken Einfluss auf die Ausgangssignale des Sensors auf, wenn ihre Frequenz im Bereich einer Anregungsfrequenz des Sensors bzw. einer Eigenfrequenz der Sensoranordnung liegt. Anhand von Schwingungsmessungen und FEM-Analysen (FEM: Finite-Elemente-Methode) kann demonstriert werden, dass Überhöhungsfaktoren, die aufgrund von Gehäuseeigenmoden entstehen, Signale der Inertialsensoren massiv stören können. Ein besonders störender Einfluss ergibt sich durch die ersten Eigenmoden im Frequenzbereich von 30 Hz bis 4 kHz. Innerhalb dieses Frequenzbereichs kann eine verhältnismäßig hohe Empfindlichkeit der Inertialsensoren, insbesondere eines zweiachsigen Beschleunigungselements nachgewiesen werden.

### Offenbarung der Erfindung

Die erfindungsgemäße Sensoranordnung, die mindestens ein Sensormodul umfasst, mit den Merkmalen des unabhängigen Patentanspruchs 1 hat demgegenüber den Vorteil, dass eine Metallbuchse eine Hülse als Einpunktfixierung und einen Teller als Trägereinheit für eine Trägerplatte umfasst, auf welcher das mindestens eine Sensormodul angeordnet ist, wobei die Hülse durch eine zentrale Durchgangsöffnung in der Trägerplatte geführt ist. Hierbei ist die Sensoranordnung über eine Befestigungsanordnung mit der Metallbuchse und geeignete Befestigungsmittel mit einer Fahrzeugkarosserie verbindbar. Der wesentliche Unterschied zu den bisherigen Ansätzen besteht darin, dass die Sensoranordnung nur noch mit einer als Zentralfixierung ausgeführten Befestigungsanordnung in Form einer Einpunktfixierung befestigt wird. Als zentrales Element wird hierzu die Metallbuchse verwendet, die sowohl zur Fixierung als auch als Funktionsträger dient.

Durch die vorgeschlagene erfindungsgemäße Konstruktion können Resonanzen in unkritische Frequenzbereiche oberhalb von ca. 4 bis 5 kHz verschoben sowie Einflüsse der Trägerplattenresonanzen und von weiteren mit der Trägerplatte verbundene Komponenten reduziert werden, indem das Sensormodul auf einem störungsunempfindlichen Bereich der Trägerplatte positioniert wird. Somit ermöglichen Ausführungsformen der vorliegenden Erfindung die Bereitstellung von schwingungstechnisch optimierten Gehäusekonstruktionen. Das bedeutet, dass die Eigenfrequenzen eines Gehäuses, welches die Sensoranordnung einschließt, in vorteilhafter Weise in einen Frequenzbereich verschoben werden können, der oberhalb von ca. 4 bis 5 kHz liegt. Da die Gehäuseeigenmoden die Hauptursache für Störungen im Sensorsignal darstellen wird deutlich wie vorteilhaft eine Entkopplung der Gehäuseeigenmoden ist. Durch Ausführungsformen der Erfindung werden die Gehäuseeigenresonanzen nicht nur entkoppelt, sondern auch die Überhöhungen auf der Trägerplatte signifikant reduziert. So kann insbesondere der Einbauort des mindestens einen Sensormoduls auf der Trägerplatte von den Gehäuseeigenmoden entkoppelt werden. Zudem kann sich durch die Einpunktfixierung eine Reduzierung der Gehäuseabmessungen ergeben.

Der erfindungsgemäße Lösungsansatz bietet Dank der vielfältigen Geometrie- und Materialparameter eine Vielzahl von schwingungs- und fertigungsoptimierten Gestaltungsmöglichkeiten. So ist der Konstrukteur dank der wirksamen Entkopplung der Gehäuseeigenmoden durch die Metallbuchse nicht mehr auf ein Gehäusematerial angewiesen, das ein hohes Elastizitätsmodul aufweist, da die Materialauswahl nicht mehr unter schwingungstechnischen Gesichtspunkten erfolgen muss. Für das Gehäuse kann in vorteilhafter Weise ein kostengünstiger Kunststoff verwendet werden, der lediglich den automobilspezifischen Anforderungen zu genügen hat. Des Weiteren ermöglicht die Konstruktions- und Werkstofffreiheit eine gezielte Verschiebung der Trägerplatteneigenmoden und der damit verbundenen Überhöhungen.

Ein weiterer Vorteil des neuen Gehäusekonzepts liegt in der Dimensionierung des Gehäuses. Durch die Zentralfixierung hängen die Gesamtabmessungen der Sensoranordnung direkt vom Durchmesser des Befestigungsmittels ab. Ein kleinerer Durchmesser bedeutet also nicht nur eine Verkleinerung der Gesamtabmessungen, da sich eine kleinere Metallbuchse, eine kleinere Trägerplatte und ein kleineres Gehäuse ergeben, sondern auch eine Reduzierung des Gewichts und der Materialkosten. Abgesehen davon kann durch die Miniaturisierung eine höhere Steifigkeit und damit eine zusätzliche Verschiebung der Eigenfrequenzen erreicht werden.

Durch die in den abhängigen Ansprüchen aufgeführten Maßnahmen und Weiterbildungen sind vorteilhafte Verbesserungen der im unabhängigen Patentanspruch 1 angegebenen Sensoranordnung möglich.

Besonders vorteilhaft ist, dass die Metallbuchse als Einlegeteil ausgeführt und zumindest teilweise in einem Boden eines Gehäuses eingelegt ist, welches die Sensoranordnung umschließt. So kann die Metallbuchse beispielsweise auf besonders einfach Weise in einem Spritzgussverfahren zumindest teilweise ummantelt werden.

In Ausgestaltung der erfindungsgemäßen Sensoranordnung ist die Trägerplatte über mehrere Halteelemente und/oder mindestens ein zentrales Auflageelement mit der Metallbuchse gekoppelt. Hierbei kann die Trägerplatte mit den Haltelementen und/oder dem mindestens einen zentralen Auflageelement verklebt werden. Eine besonders einfache Ausführungsform ergibt sich, wenn die Halteelemente und/oder das mindestens eine zentrale Auflageelement an den Gehäuseboden angeformt sind. Durch diese Ausführungsform kann in vorteilhafter Weise die Teileanzahl reduziert und das Schwingungsverhalten weiter verbessert werden.

In weiterer Ausgestaltung der erfindungsgemäßen Sensoranordnung liegt die Trägerplatte im Bereich der Durchgangsöffnung auf dem mindestens einen zentralen Auflageelement auf. Das zentrale Auflageelement kann beispielsweise als an der Hülse der Metallbuchse anliegender Ringbund an den Gehäuseboden angeformt werden.

In weiterer Ausgestaltung der erfindungsgemäßen Sensoranordnung sind die mehreren Halteelemente zwischen der Trägerplatte und dem Teller der Metallbuchse an vorgegebenen Positionen so angeordnet, dass der Einbauort des mindestens einen auf der Trägerplatte angeordneten Sensormoduls schwingungstechnisch von Eigenmoden der Sensoranordnung entkoppelt ist. Dadurch können die Störeinflüsse auf das mindestens eine Sensormodul in vorteilhafter Weise weiter reduziert werden.

In weiterer Ausgestaltung der erfindungsgemäßen Sensoranordnung wirken die Befestigungsmittel auf eine Auflagefläche am oberen Rand der Hülse. Alternativ wirken die Befestigungsmittel auf eine Auflagefläche innerhalb der Hülse. Das bedeutet, dass die Auflagefläche für die Befestigungsmittel entweder im Bereich des Gehäusedeckels oder im Bereich des Gehäusebodens angeordnet ist. Aus schwingungstechnischer Sicht verhalten sich die beiden Ausführungsformen sehr ähnlich. Das Befestigungsmittel ist beispielsweise als Schraube mit einem Schraubenkopf ausgeführt. Durch eine geschickte Positionierung der Halteelemente können die Überhöhungen auf der Trägerplatte im Platzierungsbereich des Sensormoduls bei beiden Ausführungsformen sehr gut minimiert werden. Des Weiteren konnten die Eigenmoden des Aufbaus durch den Einsatz der Metallbuchse zu höheren Frequenzen verschoben werden. Abgesehen von der schwingungsoptimierten Auslegung spielen für die praktische Umsetzung auch Material- und Fertigungskosten eine entscheidende Rolle. So sind zusätzliche Ziele bei der Entwicklung von Sensorkonzepten die Reduzierung der Masse und der geometrischen Abmessungen. Da bei der Anordnung der Auflagefläche in der Hülse eine große Aussparung für den Schraubenkopf erforderlich ist, ist diese Ausführungsform insgesamt größer dimensioniert als die Ausführungsform, bei der die Auflagefläche am Rand der Hülse angeordnet ist. Bedingt durch die größeren Buchsenabmessungen ergeben sich eine höhere Masse und eine größere Gesamtdimensionierung. Bei der außerhalb der Hülse angeordneten Auflagefläche weist die Sensoranordnung eine größere Gesamthöhe auf. Daher wird die Ausführungsform der erfindungsgemäßen Sensoranordnung in Abhängigkeit vom vorhandenen Einbauraum gewählt.

In weiterer Ausgestaltung der erfindungsgemäßen Sensoranordnung ist das mindestens eine Sensormodul bezogen auf die Hülse auf einer ersten Seite der Trägerplatte angeordnet, und mindestens eine weitere Komponente ist bezogen auf die Hülse auf einer zweiten Seite der Trägerplatte angeordnet. Durch die Anordnung der Komponenten auf verschiedenen Seiten der Trägerplatte können sich aufgrund der zentralen Fixierung der Trägerplatte die Eigenresonanzen der weiteren Komponenten, die beispielsweise einen Kondensator und/oder eine Steckeraufnahme umfassen, nicht auf die Seite des Sensormoduls ausbreiten. Damit sind die Störeinwirkungen der weiteren Komponenten in vorteilhafter Weise wirkungsvoll entkoppelt. Zusätzlich können entsprechende elektronische Auswerteschaltungen im Sensormodul integriert oder auf der Trägerplatte angeordnet werden.

In weiterer Ausgestaltung der erfindungsgemäßen Sensoranordnung ist die Metallbuchse zweiteilig ausgeführt ist, wobei die Hülse in eine korrespondierende Öffnung im Teller eingefügt ist. Dies ermöglicht in vorteilhafter Weise eine Massenproduktion der Metallbuchse mit einem relativ niedrigen Fertigungs- und Kostenaufwand. Das Fügen der beiden Teile kann beispielsweise durch Schweißen oder Pressen erfolgen. Für die Geometrie des Tellers kann eine Kreisform oder eine Rechteckform gewählt werden, was mit einer zusätzlichen Material- und Gewichteinsparung verbunden ist.

Ausführungsbeispiele der Erfindung sind in den Zeichnungen dargestellt und werden in der nachfolgenden Beschreibung näher erläutert.

### Kurze Beschreibung der Zeichnungen

Figur 1 zeigt eine schematische, perspektivische Ansicht eines ersten Ausführungsbeispiels einer erfindungsgemäßen Sensoranordnung ohne Gehäuse.
Figur 2 zeigt eine schematische Draufsicht auf das in Fig. 1 dargestellte erste Ausführungsbeispiel der erfindungsgemäßen Sensoranordnung ohne Gehäuse.
Figur 3 zeigt eine schematische Schnittdarstellung des in Fig. 1 und 2 dargestellten ersten Ausführungsbeispiels der erfindungsgemäßen Sensoranordnung ohne Gehäuse entlang der Schnittlinie III - III in Fig. 2.
Figur 4 zeigt eine schematische Schnittdarstellung eines zweiten Ausführungsbeispiels einer erfindungsgemäßen Sensoranordnung ohne Gehäuse.
Figur 5 zeigt eine schematische Schnittdarstellung eines dritten Ausführungsbeispiels einer erfindungsgemäßen Sensoranordnung ohne Gehäuse.
Figur 6 zeigt eine schematische, perspektivische Ansicht eines Ausführungsbeispiels eines Gehäusedeckels für ein erstes Ausführungsbeispiel einer erfindungsgemäßen Sensoranordnung mit Gehäuse.
Figur 7 zeigt eine schematische, perspektivische Ansicht eines Ausführungsbeispiels einer Trägerplatte für das erste Ausführungsbeispiel der erfindungsgemäßen Sensoranordnung mit Gehäuse.
Figur 8 zeigt eine schematische, perspektivische Ansicht eines Ausführungsbeispiels eines Gehäusebodens mit einer eingelegten Metallbuchse für das erste Ausführungsbeispiel der erfindungsgemäßen Sensoranordnung mit Gehäuse.
Figur 9 zeigt eine schematische, perspektivische Ansicht von oben des ersten Ausführungsbeispiels der erfindungsgemäßen Sensoranordnung mit Gehäuse.
Figur 10 zeigt eine schematische, perspektivische Ansicht von unten des ersten Ausführungsbeispiels der erfindungsgemäßen Sensoranordnung mit Gehäuse.
Figur 11 zeigt eine schematische Draufsicht auf das erste Ausführungsbeispiel der erfindungsgemäßen Sensoranordnung mit Gehäuse aus Fig. 9 und 10.
Figur 12 zeigt eine schematische Schnittdarstellung des in Fig. 9 bis 11 dargestellten ersten Ausführungsbeispiels der erfindungsgemäßen Sensoranordnung mit Gehäuse entlang der Schnittlinie XII- XII in Fig. 11.
Figur 13 zeigt eine schematische, perspektivische Ansicht eines Ausführungsbeispiels einer Metallbuchse für ein zweites Ausführungsbeispiel einer erfindungsgemäßen Sensoranordnung mit Gehäuse.
Figur 14 zeigt eine schematische, perspektivische Ansicht eines Ausführungsbeispiels eines weiteren Gehäusebodens mit der eingelegten Metallbuchse, die in Fig. 13 dargestellt ist, für das zweite Ausführungsbeispiel der erfindungsgemäßen Sensoranordnung mit Gehäuse.
Figur 15 zeigt eine schematische, perspektivische Ansicht des Ausführungsbeispiels des in Fig. 14 dargestellten Gehäusebodens mit einer transparent dargestellten Trägerplatte für das zweite Ausführungsbeispiel der erfindungsgemäßen Sensoranordnung mit Gehäuse.
Figur 16 zeigt eine schematische, perspektivische Ansicht des zweiten Ausführungsbeispiels der erfindungsgemäßen Sensoranordnung mit Gehäuse.
Figur 17 zeigt eine schematische Draufsicht auf das zweite Ausführungsbeispiel der erfindungsgemäßen Sensoranordnung mit Gehäuse aus Fig. 16.
Figur 18 zeigt eine schematische Schnittdarstellung des in Fig. 16 und 17 dargestellten zweiten Ausführungsbeispiels der erfindungsgemäßen Sensoranordnung mit Gehäuse entlang der Schnittlinie XVIII - XVIII in Fig. 17.

### Ausführungsformen der Erfindung

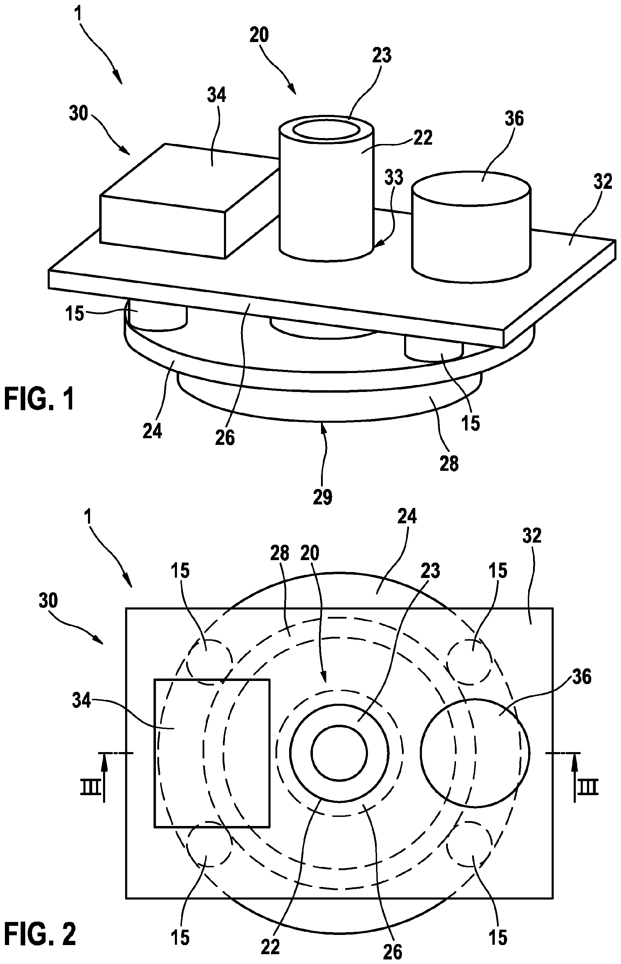

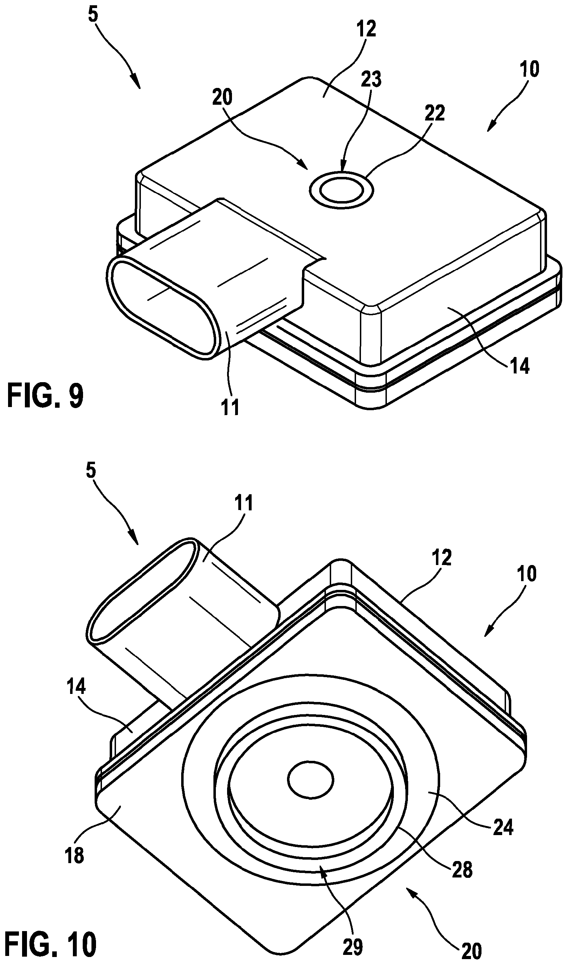

In den begleitenden Fig. 1 bis 18 bezeichnen gleiche Bezugszeichen durchgehend Elemente bzw. Komponenten, welche gleiche bzw. analoge Funktionen ausführen.

Wie aus Fig. 1 bis 3 ersichtlich ist, umfasst ein erstes Ausführungsbeispiel einer erfindungsgemäßen Sensoranordnung 1 ohne Gehäuse eine Metallbuchse 20 und eine Elektronikbaugruppe 30 mit einer Trägerplatte 32, auf welcher ein Sensormodul 34 und eine weitere beispielsweise als Kondensator ausgeführte Komponente 36 angeordnet ist. Das Sensormodul 34 ist beispielsweise als so genannter Inertialsensor ausgeführt, der mikromechanische bzw. mikroelektromechanische Sensoren umfasst und zur Messung von Beschleunigungen und/oder von Gier- bzw. Drehraten des Kraftfahrzeugs in Bezug auf verschiedene Raumachsen verwendet werden kann. Zusätzlich können entsprechende elektronische Auswerteschaltungen im Sensormodul 34 integriert oder auf der Trägerplatte 32 angeordnet werden. Erfindungsgemäß umfasst die Metallbuchse 20, welche Teil einer erfindungsgemäßen Befestigungsanordnung ist und über nicht dargestellte Befestigungsmittel mit einer nicht dargestellten Fahrzeugkarosserie verbunden werden kann, eine Hülse 22 als Einpunktfixierung und einen Teller 24 als Trägereinheit für die Trägerplatte 32. Hierbei ist die Hülse 22 der Metallbuchse 20 durch eine zentrale Durchgangsöffnung 33 in der Trägerplatte 32 geführt. Zur Auflage der Metallbuchse 20 auf der nicht dargestellten Fahrzeugkarosserie ist auf der Unterseite des Tellers 24 ein Ringbund 28 mit einer Auflagefläche 29 angeformt.

Wie aus Fig. 1 bis 3 weiter ersichtlich ist, ist die Trägerplatte 32 über mehrere Halteelemente 15, die zwischen der Trägerplatte 32 und dem Teller 24 der Metallbuchse 20 angeordnet sind, und einem zentralen als Ringbund ausgeführten Auflageelement 26 mit der Metallbuchse 20 gekoppelt. Hierbei ist das zentrale als Ringbund ausgeführte Auflageelement 26 im in Fig. 1 bis 3 dargestellten ersten Ausführungsbeispiel an die Hülse 22 und den Teller 24 angeformt, so dass die Metallbuchse 20 einteilig ausgeführt ist. Die Kopplung zwischen den Halteelementen 15, die beispielsweise als Kunststoffdome ausgeführt sind, und dem Teller 24 der Metallbuchse 20 bzw. zwischen den Halteelementen 15 und der Trägerplatte 32 kann beispielsweise durch Kleben erfolgen. Im Bereich der Durchgangsöffnung 33 liegt die Trägerplatte 32 auf einem Auflagebereich 27 des als Ringbund ausgeführten zentralen Auflageelements 26 auf. Die Kopplung zwischen dem zentralen Auflageelement 26 und der Trägerplatte 32 kann ebenfalls durch Kleben erfolgen.

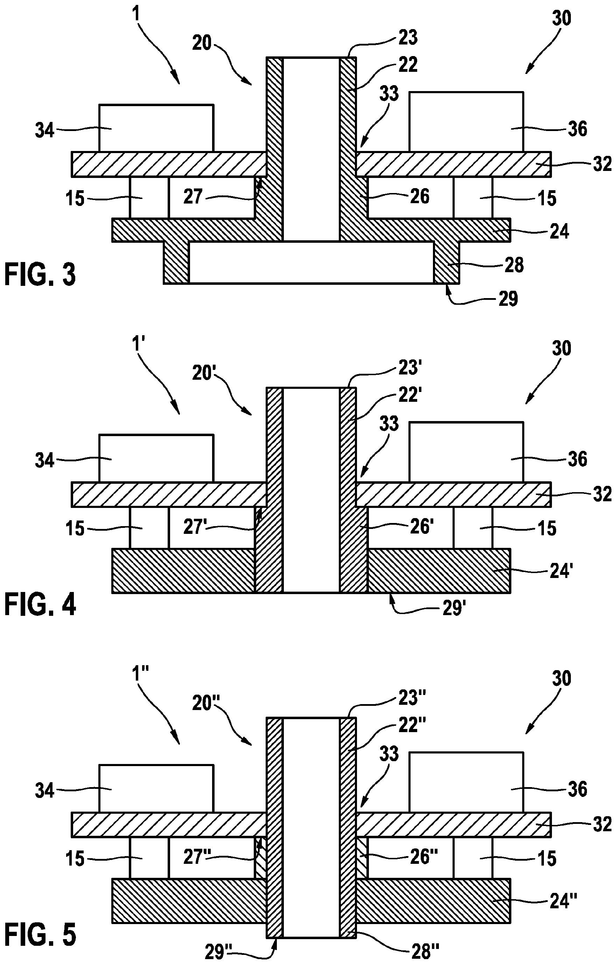

Wie aus Fig. 4 ersichtlich ist, ist im dargestellten zweiten Ausführungsbeispiel einer erfindungsgemäßen Sensoranordnung 1' ein zentrales als Ringbund ausgeführtes Auflageelement 26' mit einem Auflagebereich 27' für die Trägerplatte 32 nur an eine Hülse 22' einer Metallbuchse 20' angeformt, so dass die Metallbuchse 20' im zweiten Ausführungsbeispiel zweiteilig ausgeführt ist. Hierbei ist die Hülse 22' mit dem angeformten als Ringbund ausgeführten Auflageelement 26' in eine korrespondierende Öffnung im Teller 24' eingefügt. Das Fügen der beiden Teile kann beispielsweise durch Schweißen oder Pressen erfolgen. Die Kopplung zwischen dem zentralen Auflageelement 26' und der Trägerplatte 32 kann ebenfalls durch Kleben erfolgen. In dem in Fig. 4 dargestellten zweiten Ausführungsbeispiel liegt die Metallbuchse 20' über eine als Auflagefläche 29' ausgeführte Unterseite des Tellers 24' auf der nicht dargestellten Fahrzeugkarosserie auf.

Wie aus Fig. 5 ersichtlich ist, ist im dargestellten dritten Ausführungsbeispiel einer erfindungsgemäßen Sensoranordnung 1" ein zentrales Auflageelement 26" als Ring mit einem Auflagebereich 27" für die Trägerplatte 32 ausgeführt, welcher durch eine eingeführte Hülse 22" einer Metallbuchse 20" geführt ist. Analog zum zweiten Ausführungsbeispiel ist die Metallbuchse 20" auch im dritten Ausführungsbeispiel zweiteilig ausgeführt. Hierbei ist die Hülse 22" in eine korrespondierende Öffnung im Teller 24" eingefügt. Das Fügen der beiden Teile kann beispielsweise ebenfalls durch Schweißen oder Pressen erfolgen. Die Kopplung zwischen dem zentralen Auflageelement 26" und der Trägerplatte 32 bzw. zwischen dem zentralen Auflageelement 26" und dem Teller 24" der Metallbuchse 20" kann ebenfalls durch Kleben erfolgen. Zur Auflage der Metallbuchse 20" auf der nicht dargestellten Fahrzeugkarosserie ragt die Hülse 22" als Ringbund 28 mit einer weiteren Auflagefläche 29" über die Unterseite des Tellers 24" hinaus. Alternativ kann die Hülse analog zum zweiten Ausführungsbeispiel bündig mit der Unterseite des Tellers gefügt werden und ein zusätzlicher Ringbund an der Unterseite des Tellers angeordnet werden.

Die zweiteilige Ausführung der Metallbuchse 20', 20" ermöglicht in vorteilhafter Weise eine Massenproduktion der Metallbuchse 20', 20" mit einem relativ niedrigen Fertigungs- und Kostenaufwand. Für die Geometrie des Tellers 24, 24', 24" kann eine Kreisform oder eine Rechteckform gewählt werden, was mit einer zusätzlichen Material- und Gewichteinsparung verbunden ist.

Wie aus Fig. 1 bis 5 weiter ersichtlich ist, werden Ausführungsformen der erfindungsgemäßen Sensoranordnung 1, 1', 1" nur noch mit einer als Zentralfixierung ausgeführten Befestigungsanordnung in Form einer Einpunktfixierung befestigt. Als zentrales Element wird hierzu die Metallbuchse 20, 20', 20" verwendet, die sowohl zur Fixierung als auch als Funktionsträger dient. Durch die vorgeschlagene erfindungsgemäße Konstruktion können Resonanzen in einen unkritischen Frequenzbereich verschoben und Einflüsse von Resonanzfrequenzen der Trägerplatte 32 und von weiteren mit der Trägerplatte 32 verbundenen Komponenten 36 reduziert werden, indem das Sensormodul 34 auf einem störungsunempfindlichen Bereich der Trägerplatte 32 positioniert wird. Durch die Zentralfixierung hängen die Gesamtabmessungen der Sensoranordnung 1, 1', 1" direkt vom Durchmesser des nicht dargestellten Befestigungsmittels, d.h. vom Durchmesser der Hülse 22, 22', 22" ab. Ein kleinerer Durchmesser bedeutet also nicht nur eine Verkleinerung der Gesamtabmessungen, da sich eine kleinere Buchse, eine kleinere Leiterplatte und ein kleineres Gehäuse ergeben, sondern auch eine Reduzierung des Gewichts und der Materialkosten. Abgesehen davon kann durch die Miniaturisierung eine höhere Steifigkeit und damit eine zusätzliche Verschiebung der Eigenfrequenzen erreicht werden. Des Weiteren werden die mehreren Halteelemente 15 zwischen der Trägerplatte 32 und dem Teller 24 der Metallbuchse 20 an vorgegebenen Positionen so angeordnet, dass der Einbauort des auf der Trägerplatte 32 angeordneten Sensormoduls 34 schwingungstechnisch von Eigenmoden der Sensoranordnung 1, 1', 1" entkoppelt ist. Die optimalen Positionen können beispielsweise anhand von Versuchsaufbauten mit korrespondierenden Schwingungsmessungen und durch Simulationen und/oder FEM-Analysen ermittelt werden. Um die Störeinwirkungen der weiteren Komponente 36 in vorteilhafter Weise wirkungsvoll zu entkoppeln, ist das Sensormodul 34 bezogen auf die Hülse 22 auf der linken Seite der Trägerplatte 32 angeordnet, und die weitere Komponente 36 ist bezogen auf die Hülse 22 auf der rechten Seite der Trägerplatte 32 angeordnet. Durch die Anordnung der Komponenten auf verschiedenen Seiten der Trägerplatte 32 können sich aufgrund der zentralen Fixierung der Trägerplatte die Eigenresonanzen der weiteren Komponente 36 nicht auf die Seite des Sensormoduls 34 ausbreiten.

Wie aus Fig. 1 bis 5 weiter ersichtlich ist, können die nicht dargestellten Befestigungsmittel bei den dargestellten Ausführungsbeispielen durch die Hülse 22, 22', 22" der Metallbuchse 20, 20', 20" geführt werden und wirken jeweils auf eine Auflagefläche 23, 23', 23" am oberen Rand der Hülse 22, 22', 22".

Die bisher beschriebenen Ausführungsformen der erfindungsgemäßen Sensoranordnung 1, 1', 1" ohne Gehäuse können beispielsweise durch den Einbau eines zweiten Sensormoduls erweitert werden. Das zusätzliche Sensormodul kann beispielsweise auf der Unterseite der Trägerplatte 32 platziert werden. Beide Sensormodule befinden sich damit in dem schwingungsunempfindlichen Bereich der Trägerplatte 32. Da sich die Abmessungen nur geringfügig erhöhen, bietet es sich an, für beide Konzepte ein Universalgehäuse zu konzipieren. Der Einsatz eines Universalgehäuses ist nicht nur mit einem enormen Einsparpotential verbunden, sondern bringt auch einen entscheidenden Kundenvorteil mit sich. Der Kunde kann bei Erweiterung seines Systems die bestehende Halterung verwenden, und spart die Entwicklungskosten für eine neue Halterung. Die bisher beschriebenen Ausführungsformen der erfindungsgemäßen Sensoranordnung 1, 1', 1" ohne Gehäuse können beispielsweise innerhalb eines Steuergerätes eingesetzt werden, so dass ein zusätzliches Gehäuse für die Sensoranordnung 1, 1', 1" nicht erforderlich ist.

Nachfolgend werden noch zwei Ausführungsbeispiele einer erfindungsgemäßen Sensoranordnung 5, 105 mit Gehäuse beschrieben, die an beliebigen Stellen im Fahrzeug eingebaut werden können.

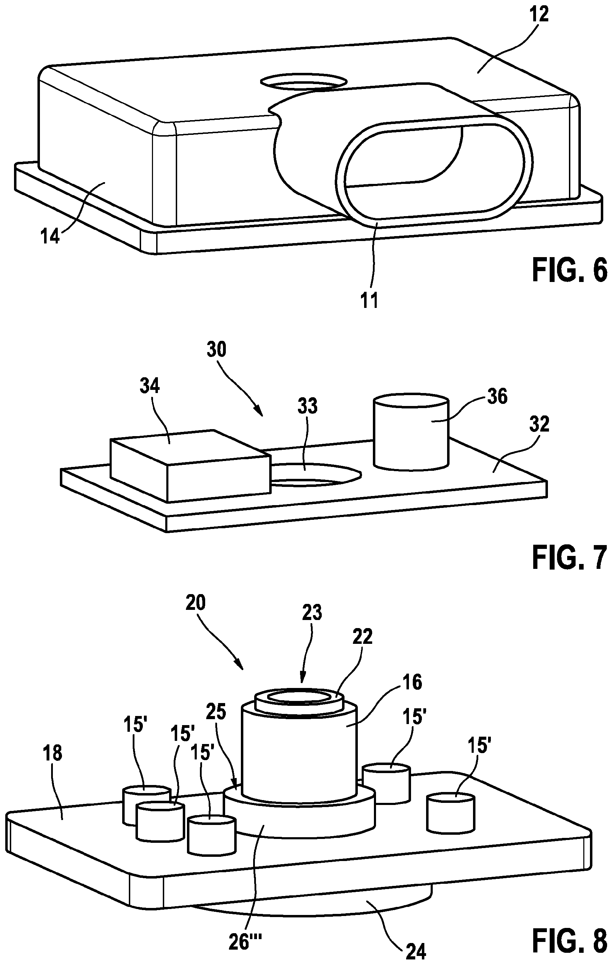

Wie aus Fig. 6 bis 12 ersichtlich ist, ist bei dem dargestellten ersten Ausführungsbeispiel einer erfindungsgemäßen Sensoranordnung 5 mit Gehäuse 10 die Trägerplatte 32 innerhalb des Gehäuses 10 angeordnet, welches einen als Gehäusekörper ausgeführten Deckel 12 mit einer angeformten Steckeraufnahme 11 und angeformten Seitenwänden 14 sowie einen Boden 18 umfasst. Wie bereits ausgeführt wurde, dient die Metallbuchse 20, die beispielsweise eine der bereits beschriebenen Ausführungsformen aufweist, als zentrale Fixierungs- und Trägereinheit. Für die weitere Beschreibung wird vorausgesetzt, dass die Metallbuchse gemäß dem in Fig. 1 bis 3 dargestellten ersten Ausführungsbeispiel ausgeführt ist. Die Metallbuchse 20 wird als Einlegeteil mit dem aus Kunststoff gefertigten Boden 18 in Spritzgusstechnik umspritzt. Zudem enthält der Gehäuseboden 18 als Kunststoffdome ausgeführte Halteelemente 15', die als Träger für die Trägerplatte 32 verwendet werden. Wie bereits ausgeführt wurde, werden die mehreren Halteelemente 15' zwischen der Trägerplatte 32 und dem Teller 24 der Metallbuchse 20 an vorgegebenen Positionen so angeordnet, dass der Einbauort des auf der Trägerplatte 32 angeordneten Sensormoduls 34 schwingungstechnisch von Eigenmoden der Sensoranordnung 5 entkoppelt ist. Zusätzlich zu den als Kunststoffdome ausgeführten Halteelementen 15', die im Bereich des umspritzten Tellers 24 der Metallbuchse 20 angeordnet sind, ist ein Kunststoffring 26"' mit einem Auflagebereich 25 um die Hülse 22 der Metallbuchse 20 als zentrale Fixierung der Trägerplatte 32 vorgesehen. Die Befestigung der Trägerplatte 32 auf den Halteelementen 15' und dem zentralen Auflageelement 26"' erfolgt beispielsweise mittels Klebetechnik. Durch die erfindungsgemäße Anordnung kann eine schwingungstechnisch günstige Platzierung der Bauelemente 34, 36 auf der Trägerplatte 32 realisiert werden. Das Sensormodul 34 ist auf der gegenüberliegenden Seite des Kondensators 36 angebracht, mit dem Ziel eine eventuelle Rückkopplung der Eigenresonanzen des Kondensators 36 auf das Sensormodul 34 zu minimieren. Des Weiteren können die Eigenmoden der Sensoranordnung 5 durch den Einsatz der Metallbuchse 20 zu höheren Frequenzen in einen Bereich oberhalb von ca. 4 bis 5 kHz verschoben werden. Eine elektrische Kontaktierung erfolgt über die an den als Gehäusekörper ausgeführten Deckel 12 angeformte Steckeraufnahme 11. Der Gehäusedeckel 12 ist ebenfalls als Spritzgussbauteil konzipiert und enthält hier nicht dargestellte Pins zur elektrischen Kontaktierung. Der als Gehäusekörper ausgeführte Deckel 12 kann beispielsweise mittels Laserschweißtechnik mit dem Gehäuseboden 18 verschweißt werden, um die Elektronikbaugruppe 30 nach außen gegen Spritzwasser abzudichten. Zudem erzeugt das Gehäuse 10 eine Dämpfungswirkung, die sich positiv auf das Signalverhalten des Sensormoduls 34 auswirkt.

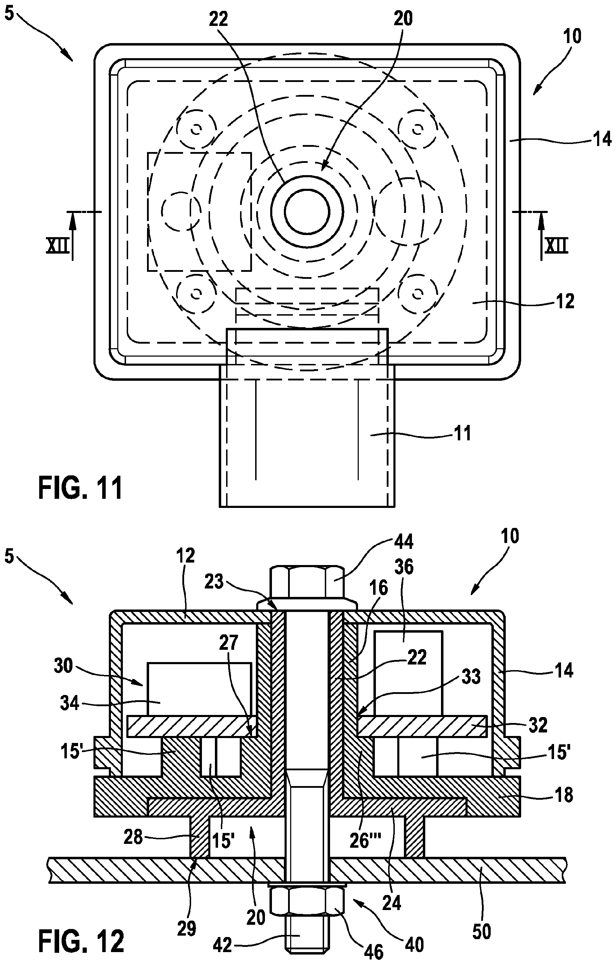

Wie aus Fig. 12 weiter ersichtlich ist, wird die Sensoranordnung 5 über ein Befestigungsmittel 40, das hier beispielsweise eine Schraube 42 mit Schraubenkopf 44 und eine Befestigungsmutter 46 umfasst, mit der Fahrzeugkarosserie 50 verbunden. Hierbei wirkt der Schraubenkopf 44 auf die Auflagefläche 23, die am oberen Rand der Hülse 22 im Bereich des Gehäusedeckels 12 angeordnet ist. Die Metallbuchse 20 stützt sich über den auf der Unterseite des Tellers 24 angeformten Ringbund 28 mit der Auflagefläche 29 auf der Fahrzeugkarosserie 50 ab. Alternativ kann die Schraube 42 in einem in die Fahrzeugkarosserie 50 eingebrachten nicht dargestellten Innengewinde eingeschraubt werden. Zudem kann ein Gewindebolzen fest mit der Fahrzeugkarosserie 50 verbunden werden, wobei in diesem Fall die Hülse 22 der Metallbuchse 20 auf den Gewindebolzen gesteckt wird, und wobei die Hülse 22 über eine auf den Gewindebolzen aufgeschraubte Mutter festgelegt wird, die auf die Auflagefläche 23 am oberen Rand der Hülse 22 wirkt.

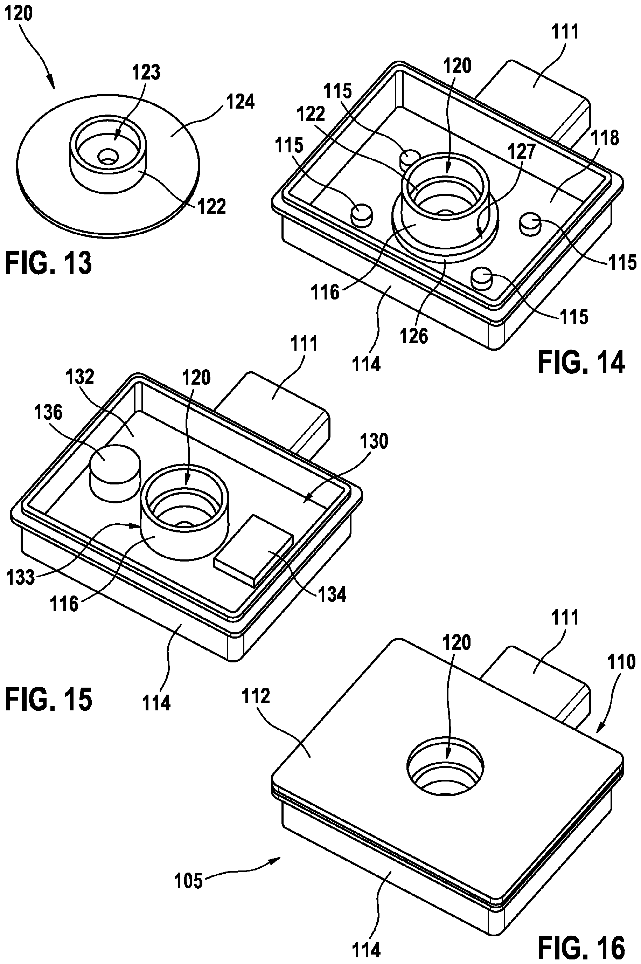

Wie aus Fig. 13 bis 18 ersichtlich ist, ist bei dem dargestellten zweiten Ausführungsbeispiel einer erfindungsgemäßen Sensoranordnung 105 mit Gehäuse 110 die Trägerplatte 132 ebenfalls innerhalb des Gehäuses 110 angeordnet, welches einen als Gehäusekörper ausgeführten Boden 118 mit einer angeformten Steckeraufnahme 111 und angeformten Seitenwänden 114 sowie einen Deckel 120 umfasst. Wie bereits ausgeführt wurde, dient eine Metallbuchse 120 als zentrale Fixierungs- und Trägereinheit. Die Metallbuchse 120 wird als Einlegeteil mit dem aus Kunststoff gefertigten Boden 118 in Spritzgusstechnik zumindest teilweise umspritzt. Zudem enthält der Gehäuseboden 118 analog zum ersten Ausführungsbeispiel als Kunststoffdome ausgeführte Halteelemente 115, die als Träger für die Trägerplatte 132 verwendet werden. Wie bereits ausgeführt wurde, werden die mehreren Halteelemente 115 zwischen der Trägerplatte 132 und einem Teller 124 der Metallbuchse 120 an vorgegebenen Positionen so angeordnet, dass der Einbauort des auf der Trägerplatte 132 angeordneten Sensormoduls 134 schwingungstechnisch von Eigenmoden der Sensoranordnung 105 entkoppelt ist. Zusätzlich zu den als Kunststoffdome ausgeführten Halteelementen 115, die im Bereich des umspritzten Tellers 124 der Metallbuchse 120 angeordnet sind, ist ein Kunststoffring 126 mit einem Auflagebereich 127 um die Hülse 122 der Metallbuchse 120 als zentrale Fixierung der Trägerplatte 132 vorgesehen. Die Befestigung der Trägerplatte 132 auf den Halteelementen 115 und dem zentralen Auflageelement 126 erfolgt beispielsweise mittels Klebetechnik. Durch die erfindungsgemäße Anordnung kann eine schwingungstechnisch günstige Platzierung der Bauelemente 134, 136 auf der Trägerplatte 132 realisiert werden. Auch beim zweiten Ausführungsbeispiel ist das Sensormodul 134 auf der gegenüberliegenden Seite des Kondensators 136 angebracht, mit dem Ziel eine eventuelle Rückkopplung der Eigenresonanzen des Kondensators 136 auf das Sensormodul 134 zu minimieren. Des Weiteren können auch die Eigenmoden der Sensoranordnung 105 durch den Einsatz der Metallbuchse 120 zu höheren Frequenzen in einen Bereich oberhalb von ca. 4 bis 5 kHz verschoben werden. Eine elektrische Kontaktierung erfolgt über die an den als Gehäusekörper ausgeführten Boden 118 angeformte Steckeraufnahme 111. Der Gehäusedeckel 12 ist ebenfalls als Spritzgussbauteil konzipiert und kann beispielsweise mittels Laserschweißtechnik mit dem Gehäuseboden 118 verschweißt werden, um die Elektronikbaugruppe 130 nach außen gegen Spritzwasser abzudichten. Zudem erzeugt das Gehäuse 110 eine Dämpfungswirkung, die sich positiv auf das Signalverhalten des Sensormoduls 134 auswirkt.

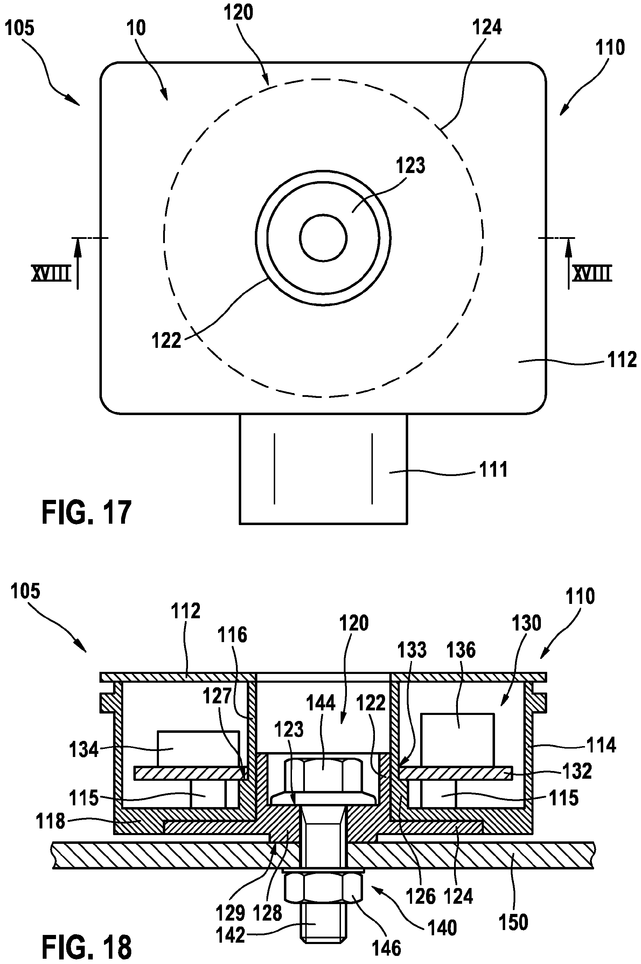

Wie aus Fig. 18 weiter ersichtlich ist, wird die Sensoranordnung 105 über ein Befestigungsmittel 140, das hier beispielsweise eine Schraube 142 mit Schraubenkopf 144 und eine Befestigungsmutter 146 umfasst, mit der Fahrzeugkarosserie 150 verbunden. Hierbei wirkt der Schraubenkopf 144 auf eine Auflagefläche 123, die innerhalb der Hülse 122 im Bereich des Gehäusebodens 118 angeordnet ist. Die Metallbuchse 120 stützt sich über einen auf der Unterseite des Tellers 124 angeformten Ringbund 128 mit einer Auflagefläche 129 auf der Fahrzeugkarosserie 150 ab. Selbstverständlich können auch hier andere Befestigungsmittel verwendet werden, die eine Einpunktfixierung ermöglichen.

Bei einer weiteren nicht dargestellten Ausführungsform einer erfindungsgemäßen Sensoranordnung mit Gehäuse kann der Einfluss der Steckerkontaktierung dadurch reduziert werden, dass die Steckeraufnahme und die Einpresspins für die Steckerkontaktierung wie der Kondensator auf der dem Sensormodul gegenüberliegenden Seite der Trägerplatte angeordnet werden. Dadurch kann aufgrund der zentralen Fixierung der Trägerplatte über die Metallbuchse nahezu eine völlige Entkopplung der Steckervibrationen realisiert werden. Ein weiterer Aspekt, der bisher noch nicht erwähnt wurde, ist die korrekte Ausrichtung der Sensoranordnung beim Einbau im Fahrzeug. Bei konventionellen Gehäusen wird durch eine Zweipunkt-Fixierung eine korrekte Justierung beim Einbau gewährleistet. Durch den Wegfall der zweiten Befestigungsschraube ist die Zwangsbedingung nicht mehr gegeben. Sie kann jedoch beispielsweise durch einen Kunststoffdorn im Gehäuseboden realisiert werden. Dieser wird bei der Montage durch ein hierfür vorgesehenes Loch im Einbauort gesteckt. Der Kunststoffdorn bietet gegenüber der Zweipunkt-Fixierung den weiteren Vorteil, dass eine verkehrte Montage der Sensoranordnung verhindert wird.

Ausführungsformen der Erfindung ermöglichen durch die Metallbuchse, die als zentrale Fixier- und Trägereinheit dient und die "Einpunktfixierung" ermöglicht, in vorteilhafter Weise eine Verschiebung von Resonanzfrequenzen in unkritische Frequenzbereiche oberhalb von ca. 4 bis 5 kHz und eine Reduzierung des Einflusses von Trägerplattenresonanzen und von anderen Komponenten, die auf der Trägerplatte angeordnet sind.

## Patentansprüche

1. Sensoranordnung (1, 1', 1", 5, 105) mit mindestens einem auf einer Trägerplatte (32, 132) angeordneten Sensormodul (34, 134) und einer Befestigungsanordnung mit einer Metallbuchse (20, 20', 20", 120) und Befestigungsmitteln (40, 140), wobei die Metallbuchse (20, 20', 20", 120) über die Befestigungsmittel (40, 140) mit einer Fahrzeugkarosserie (50, 150) verbindbar ist, wobei die Metallbuchse (20, 20', 20", 120) eine Hülse (22, 22', 22", 122) als Einpunktfixierung und einen Teller (24, 24', 24", 124) als Trägereinheit für die Trägerplatte (32, 132) umfasst, und wobei die Hülse (22, 22', 22", 122) durch eine zentrale Durchgangsöffnung (33, 133) in der Trägerplatte (32, 132) geführt ist und das Sensormodul (34, 134) auf einem störungsunempfindlichen Bereich der Trägerplatte (32, 132) positioniert ist, in dem Störeinflüsse der Trägerplattenresonanzen und von Resonanzen weiterer mit der Trägerplatte (32, 132) verbundener Komponenten (36, 11, 111) reduziert sind.

2. Sensoranordnung nach Anspruch 1, **gekennzeichnet durch** ein Gehäuse (10, 110), welches die Sensoranordnung (1, 1', 1", 5, 105) umschließt, wobei die Metallbuchse (20, 20', 20", 120) als Einlegeteil ausgeführt und zumindest teilweise in einen Boden (18, 118) des Gehäuses (10, 110) eingelegt ist.

3. Sensoranordnung nach Anspruch 1 oder 2, **dadurch gekennzeichnet, dass** die Trägerplatte (32, 132) über mehrere Halteelemente (15, 15', 115) und/oder mindestens ein zentrales Auflageelement (26, 26', 26", 26"', 126) mit der Metallbuchse (20, 20', 20", 120) gekoppelt ist.

4. Sensoranordnung nach Anspruch 3, **dadurch gekennzeichnet, dass** die Halteelemente (15, 15', 115) und/oder das mindestens eine zentrale Auflageelement (26, 26', 26", 26"', 126) an einen Gehäuseboden (18, 118) angeformt sind.

5. Sensoranordnung nach Anspruch 3 oder 4, **dadurch gekennzeichnet, dass** die Trägerplatte (32, 132) im Bereich der Durchgangsöffnung (33, 133) auf dem mindestens einen zentralen Auflageelement (26, 26', 26", 26"', 126) aufliegt.

6. Sensoranordnung nach einem der Ansprüche 3 bis 5, **dadurch gekennzeichnet, dass** die mehreren Halteelemente (15, 15', 115) zwischen der Trägerplatte (32, 132) und dem Teller (24, 24', 24", 124) der Metallbuchse (20, 20', 20", 120) an vorgegebenen Positionen so angeordnet sind, dass ein Einbauort des mindestens einen auf der Trägerplatte (32, 132) angeordneten Sensormoduls (34, 134) schwingungstechnisch von Eigenmoden der Sensoranordnung (1, 101) entkoppelt ist.

7. Sensoranordnung nach einem der Ansprüche 1 bis 6, **dadurch gekennzeichnet, dass** die Befestigungsmittel (40, 140) auf eine Auflagefläche (23, 23', 23") am Rand der Hülse (22, 22', 22") oder auf eine Auflagefläche (123) innerhalb der Hülse (122) wirken.

8. Sensoranordnung nach einem der Ansprüche 1 bis 7, **dadurch gekennzeichnet, dass** das mindestens eine Sensormodul (34, 134) bezogen auf die Hülse (22, 22', 22", 122) auf einer ersten Seite der Trägerplatte (32, 132) angeordnet ist, und mindestens eine weitere Komponente (36, 11, 111) bezogen auf die Hülse (22, 22', 22", 122) auf einer zweiten Seite der Trägerplatte (32, 132) angeordnet ist.

9. Sensoranordnung nach einem der Ansprüche 1 bis 8, **dadurch gekennzeichnet, dass** die Metallbuchse (20', 20") zweiteilig ausgeführt ist, wobei die Hülse (22', 22") in eine korrespondierende Öffnung im Teller (24', 24") eingefügt ist.

## Claims

1. Sensor arrangement (1, 1', 1", 5, 105) having at least one sensor module (34, 134) arranged on a carrier plate (32, 132) and a fastening arrangement with a metal bush (20, 20', 20", 120) and fastening means (40, 140), wherein the metal bush (20, 20', 20", 120) can be connected to a vehicle body (50, 150) via the fastening means (40, 140), wherein the metal bush (20, 20', 20", 120) comprises a sleeve (22, 22', 22", 122) as single-point fixing and a disc (24, 24', 24", 124) as carrier unit for the carrier plate (32, 132), and wherein the sleeve (22, 22', 22'', 122) is led through a central passage opening (33, 133) in the carrier plate (32, 132), and the sensor module (34, 134) is positioned on an area of the carrier plate (32, 132) which is not susceptible to interference and in which interfering influences of the carrier plate resonances and of resonances of further components (36, 11, 111) connected to the carrier plate (32, 132) are reduced.

2. Sensor arrangement according to Claim 1, **characterized by** a housing (10, 110), which encloses the sensor arrangement (1, 1', 1", 5, 105), wherein the metal bush (20, 20', 20", 120) is embodied as an insertion part and is at least partly inserted into a base (18, 118) of the housing (10, 110).

3. Sensor arrangement according to Claim 1 or 2, **characterized in that** the carrier plate (32, 132) is coupled to the metal bush (20, 20', 20'', 120) via a plurality of holding elements (15, 15', 115) and/or at least one central support element (26, 26', 26", 26"', 126).

4. Sensor arrangement according to Claim 3, **characterized in that** the holding elements (15, 15', 115) and/or the at least one central support element (26, 26', 26", 26"', 126) are integrally moulded onto a housing base (18, 118).

5. Sensor arrangement according to Claim 3 or 4, **characterized in that** in the area of the passage opening (33, 133), the carrier plate (32, 132) rests on the at least one central support element (26, 26', 26'', 26"', 126).

6. Sensor arrangement according to one of Claims 3 to 5, **characterized in that** the plurality of holding elements (15, 15', 115) between the carrier plate (32, 132) and the disc (24, 24', 24'', 124) of the metal bush (20, 20', 20", 120) are arranged at predefined positions such that an installation location of the at least one sensor module (34, 134) arranged on the carrier plate (32, 132) is decoupled in terms of vibration from eigenmodes of the sensor arrangement (1, 101).

7. Sensor arrangement according to one of Claims 1 to 6, **characterized in that** the fastening means (40, 140) act on a support surface (23, 23', 23") at the edge of the sleeve (22, 22', 22") or a support surface (123) within the sleeve (122).

8. Sensor arrangement according to one of Claims 1 to 7, **characterized in that** the at least one sensor module (34, 134) is arranged on a first side of the carrier plate (32, 132) with respect to the sleeve (22, 22', 22", 122), and at least one further component (36, 11, 111) is arranged on a second side of the carrier plate (32, 132) with respect to the sleeve (22, 22', 22", 122).

9. Sensor arrangement according to one of Claims 1 to 8, **characterized in that** the metal bush (20', 20") is embodied in two parts, wherein the sleeve (22', 22") is inserted into a corresponding opening in the disc (24', 24").

## Revendications

1. Arrangement capteur (1, 1', 1", 5, 105) comprenant au moins un module capteur (34, 134) disposé sur une plaque porteuse (32, 132) et un arrangement de fixation pourvu d'une douille métallique (20, 20', 20", 120) et de moyens de fixation (40, 140), la douille métallique (20, 20', 20", 120) pouvant être reliée à une carrosserie de véhicule (50, 150) par le biais des moyens de fixation (40, 140), la douille métallique (20, 20', 20", 120) comportant un manchon (22, 22', 22", 122) en tant que fixation en un seul point et un plateau (24, 24', 24", 124) faisant office d'unité porteuse pour la plaque porteuse (32, 132), et le manchon (22, 22', 22", 122) étant guidé à travers une ouverture de passage (33, 133) dans la plaque porteuse (32, 132) et le module capteur (34, 134) étant positionné sur une zone de la plaque porteuse (32, 132) qui est insensible aux perturbations, dans laquelle les influences parasites des résonances de la plaque porteuse et des résonances de composants supplémentaires (36, 11, 111) reliés avec la plaque porteuse (32, 132) sont réduites.

2. Arrangement capteur selon la revendication 1, **caractérisé par** un boîtier (10, 110) qui entoure l'arrangement capteur (1, 1', 1", 5, 105), la douille métallique (20, 20', 20", 120) étant réalisée sous la forme d'une pièce à insérer et étant au moins partiellement insérée dans un fond (18, 118) du boîtier (10, 110).

3. Arrangement capteur selon la revendication 1 ou 2, **caractérisé en ce que** la plaque porteuse (32, 132) est accouplée à la douille métallique (20, 20', 20", 120) par le biais de plusieurs éléments de maintien (15, 15', 115) et/ou au moins un élément d'appui central (26, 26', 26", 26"', 126).

4. Arrangement capteur selon la revendication 3, **caractérisé en ce que** les éléments de maintien (15, 15', 115) et/ou l'au moins un élément d'appui central (26, 26', 26", 26"', 126) sont façonnés sur un fond de boîtier (18, 118).

5. Arrangement capteur selon la revendication 3 ou 4, **caractérisé en ce que** la plaque porteuse (32, 132), dans la zone de l'ouverture de passage (33, 133), repose sur l'au moins un élément d'appui central (26, 26', 26", 26"', 126).

6. Arrangement capteur selon l'une des revendications 3 à 5, **caractérisé en ce que** les plusieurs éléments de maintien (15, 15', 115) sont disposés entre la plaque porteuse (32, 132) et le plateau (24, 24', 24", 124) de la douille métallique (20, 20', 20", 120) à des positions prédéfinies de telle sorte qu'un emplacement de montage de l'au moins un module capteur (34, 134) disposé sur la plaque porteuse (32, 132) est techniquement découplé des vibrations des modes propres de l'arrangement capteur (1, 101).

7. Arrangement capteur selon l'une des revendications 1 à 6, **caractérisé en ce que** les moyens de fixation (40, 140) agissent sur une surface d'appui (23, 23', 23") au bord du manchon (22, 22', 22") ou sur une surface d'appui (123) à l'intérieur du manchon (122).

8. Arrangement capteur selon l'une des revendications 1 à 7, **caractérisé en ce que** l'au moins un module capteur (34, 134) est disposé sur un premier côté de la plaque porteuse (32, 132) par rapport au manchon (22, 22', 22", 122) et au moins un composant supplémentaire (36, 11, 111) est disposé sur un deuxième côté de la plaque porteuse (32, 132) par rapport au manchon (22, 22', 22", 122).

9. Arrangement capteur selon l'une des revendications 1 à 8, **caractérisé en ce que** la douille métallique (20', 20") est réalisée en deux parties, le manchon (22', 22") étant insérée dans une ouverture correspondante dans le plateau (24', 24").
